(19) Europäisches Patentamt / European Patent Office / Office européen des brevets

(11) **EP 2 146 856 B1**

(12) **FASCICULE DE BREVET EUROPEEN**

(45) Date de publication et mention de la délivrance du brevet:
**24.10.2018 Bulletin 2018/43**

(21) Numéro de dépôt: **08788175.1**

(22) Date de dépôt: **14.04.2008**

(51) Int Cl.:
*B60W 10/08* (2006.01)    *B60K 6/26* (2007.10)
*B60K 6/44* (2007.10)    *B60L 11/12* (2006.01)
*B60L 15/00* (2006.01)    *B60W 20/00* (2016.01)
*B60L 7/14* (2006.01)    *B60L 15/20* (2006.01)
*B60W 10/26* (2006.01)

(86) Numéro de dépôt international:
**PCT/FR2008/050657**

(87) Numéro de publication internationale:
**WO 2008/142339 (27.11.2008 Gazette 2008/48)**

(54) **SYSTEME D'ECHANGE D'ENERGIE ELECTRIQUE, EN PARTICULIER POUR UN VEHICULE HYBRIDE**

AUSTAUSCHSYSTEM FÜR ELEKTRISCHE LEISTUNG, INSBESONDERE FÜR EIN HYBRIDFAHRZEUG

ELECTRIC ENERGY EXCHANGE SYSTEM, IN PARTICULAR FOR A HYBRID VEHICLE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **16.04.2007 FR 0754492**

(43) Date de publication de la demande:
**27.01.2010 Bulletin 2010/04**

(73) Titulaire: **Renault S.A.S.**
**92100 Boulogne-Billancourt (FR)**

(72) Inventeurs:
• **LOUDOT, Serge**
 **F-91190 Villiers Le Bacle (FR)**
• **PUGSLEY, Gareth**
 **F-78330 Fontenay Le Fleuri (FR)**

(56) Documents cités:
**WO-A-2005/036297     WO-A-2005/081387
US-A1- 2005 242 787**

• **TUCKEY A M ET AL: "A NEW RESONANT DC LINK/BOOST CONVERTER TOPOLOGY APPLIED TO EXTENDED SPEED OPERATION OF A BRUSHLESS DC MACHINE" APEC '98. 13TH ANNUAL APPLIED POWER ELECTRONICS CONFERENCE AND EXPOSITION. ANAHEIM, CA, FEBR. 15 - 19, 1998, ANNUAL APPLIED POWER ELECTRONICS CONFERENCE, NEW YORK, NY : IEEE, US, vol. VOL. 1, 15 février 1998 (1998-02-15), pages 294-300, XP000873675 ISBN: 0-7803-4341-7**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention a pour objet un système d'échange d'énergie électrique entre au moins un élément moteur-générateur et au moins un élément de stockage d'une tension continue et s'applique, en particulier, à un véhicule ayant un système de propulsion dit "hybride".

Les contraintes de plus en plus sévères en termes de compromis performances/consommation/émissions conduisent à développer des véhicules dits "hybrides" qui semblent apporter une solution performante à l'ensemble des problèmes posés.

D'une façon générale, un véhicule à propulsion hybride comporte un moteur principal, par exemple à combustion interne, qui entraîne les roues motrices par un système de transmission mécanique, et un système de dérivation de puissance électrique comportant au moins une machine électrique branchée sur un élément de stockage d'énergie tel qu'une batterie et pouvant fonctionner soit en moteur fournissant un couple se substituant ou s'ajoutant au couple fourni par le moteur principal, soit en générateur fournissant une tension continue de rechargement de la batterie à partir du couple fourni par les roues motrices en cas de freinage ou de ralentissement.

On connaît différents types de véhicule hybrides. Le document WO 2005/081 387, par exemple, décrit un système comportant deux machines électriques pouvant fonctionner en moteur ou générateur.

Dans un mode de fonctionnement dit à dérivation de puissance électrique, au moins une partie de la puissance mécanique fournie par le moteur principal sert à entraîner une première machine fonctionnant en générateur pour fournir une puissance électrique appliquée sur la seconde machine qui fonctionne en moteur appliquant sur les roues, par l'intermédiaire du système de transmission, un couple qui dépend de la vitesse de rotation du moteur électrique. Un tel système permet, en particulier, de réaliser électriquement une variation continue du rapport de transmission.

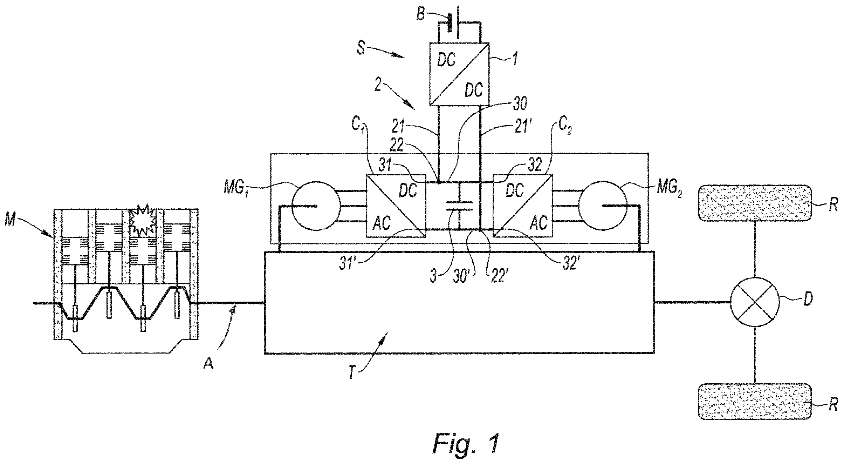

La figure 1 est un schéma de principe d'un tel véhicule à dérivation de puissance électrique comportant un moteur thermique M, entraînant un arbre A relié aux roues motrices R par une transmission mécanique T et, éventuellement, un différentiel D et un système S à dérivation de puissance électrique comportant deux machines électriques moteur-générateur MG1, MG2 fonctionnant en courant triphasé et reliées électriquement à une batterie B, chacune par l'intermédiaire d'un convertisseur continu/alternatif C1, C2.

En effet, d'une façon connue, décrite dans le document WO 2005/081 387, la tension fournie, en décharge par la batterie B ou appliquée sur celle-ci en charge, est contrôlée par un convertisseur continu-continu branché sur les deux bornes, respectivement positive et négative de la batterie B, et relié aux deux convertisseurs continu/alternatif C1, C2 par un circuit 2 appelé "bus" ayant deux branches, respectivement positive 21 et négative 21' branchées chacune, à partir d'un point nodal 22,22', sur les deux bornes continues, respectivement 31, 31' du convertisseur continu-alternatif C1 et 32, 32' du convertisseur C2.

Une capacité de filtrage 3 est branchée en parallèle entre les deux bus positifs 21 et négatifs 21'.

La constitution et le fonctionnement des différents circuits d'un tel système électrique est décrite en détail dans le document WO 2005/081 387. En particulier, chaque convertisseur continu/alternatif comporte trois bras branchés en parallèle sur les bornes continues du convertisseur et correspondant respectivement aux trois phases du moteur MG1, MG2, chaque bras comportant deux transistors montés chacun avec une diode en antiparallèle.

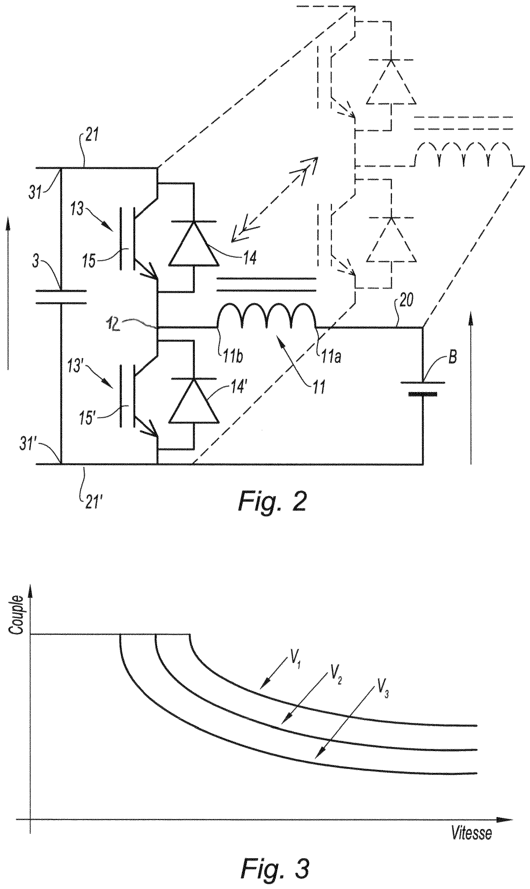

De même, dans une telle disposition, le convertisseur continu/continu 1 comporte, de la façon représentée schématiquement sur la figure 2, une inductance 11 ayant une entrée 11a branchée sur la borne positive de la batterie B et une sortie 11b branchée sur un point neutre intermédiaire 12 relié, respectivement, au bus positif 21 et au bus négatif 21' par deux circuits en série 13, 13' comportant chacun une diode 14, 14' montée en antiparallèle avec un transistor de puissance 15, 15'.

Comme le montre la figure 2, les diodes 14, 14' permettent le passage du courant entre les deux branches 21, 21' et le point neutre 12 sur lequel est branchée la sortie de l'inductance 11 est relié d'un côté, à l'émetteur du transistor 15 dont le collecteur est relié au bus positif 21 et, de l'autre, au collecteur du transistor 13' dont l'émetteur est relié au bus négatif 21'.

De façon connue, comme le montre schématiquement la figure 2, afin d'augmenter la puissance admissible, le convertisseur 1 peut comporter un ou plusieurs autres bras en parallèle, à commande entrelacée, de la façon représentée en pointillés sur la figure 2.

D'une façon générale, un tel convertisseur continu/continu permet d'élever la tension aux bornes 31, 31' de la capacité de filtrage 3, par rapport à la tension délivrée aux bornes de la batterie B. Il permet, d'une part, de contrôler les échanges d'énergie entre la batterie B et les machines électriques MG1, MG2 en mode moteur dit en anglais "boost" ou en freinage récupératif et, d'autre part, de maintenir la tension de la capacité de filtrage 3, c'est-à-dire entre les bus positif 21 et négatif 21', à une valeur optimale compte tenu des conditions d'avancement du véhicule qui correspondent à un couple et une certaine vitesse de rotation des machines électriques MG1, MG2.

Un tel système d'échange d'énergie entre un élément de stockage tel qu'une batterie et au moins une machine électrique moteur-générateur, comportant un convertisseur continu/continu, une capacité de filtrage et un convertisseur continu/alternatif, est bien connu et avait également été décrit dans le document EP 1 138 539. Dans ce cas, la machine électrique servait, en mode moteur, à démarrer le moteur thermique et, en mode générateur, à recharger la batterie, un tel système permettant, ainsi, d'éviter l'emploi d'un alternateur.

Par ailleurs, d'autres dispositions sont possibles pour réaliser un convertisseur continu/continu permettant d'élever la tension entre les deux bus positif et négatif et de contrôler celle-ci à une valeur optimale. Par exemple, un tel convertisseur peut être utilisé en complément d'un alternateur de la façon décrite dans le document FR-A-2 858 484 qui donne plusieurs exemples de réalisation d'un convertisseur continu/continu comportant, d'une façon générale, une inductance ayant une entrée branchée sur la borne positive de la batterie et une sortie branchée sur un point intermédiaire relié au bus négatif et au bus positif par deux circuits en série, respectivement un circuit générateur d'un courant pulsé et un circuit élévateur de tension.

Cependant, dans la suite du texte, on se référera essentiellement au type de convertisseur continu/continu décrit dans le document WO 2005/081 387 et représenté schématiquement sur la figure 2, comportant une inductance et deux transistors de puissance du type à grille isolée dit, en anglais, "Insulated Gate Bipolar Transistor" (IGBT).

Comme indiqué plus haut, un tel convertisseur permet de maintenir la tension aux bornes de la capacité de filtrage à une valeur optimale qui dépend des conditions d'avancement du véhicule, c'est-à-dire du point de fonctionnement couple/vitesse de la machine électrique ou des deux machines dans le cas du document WO 2005/081 387. A cet effet, ce document décrit en détail comment une unité de contrôle recevant des informations représentatives du couple demandé à chacun des deux moteurs et de leur vitesse de rotation, détermine, à chaque instant, la tension optimale demandée entre les bornes du convertisseur et commande la commutation des différents circuits pour l'obtention et le maintien de cette tension optimale.

En particulier, on sait que, pour déterminer les conditions de fonctionnement d'une machine électrique, on peut tracer un diagramme du type représenté sur la figure 3 indiquant le couple en fonction de la vitesse de rotation et l'on sait que la courbe enveloppe dépend de la tension continue aux bornes d'un onduleur. Par exemple, sur la figure 3, on a représenté les courbes enveloppes en moteur correspondant respectivement à des tensions continues V1, V2, V3 avec

$$VI > V2 > V3$$

et il apparaît que le couple accessible à haute vitesse est d'autant plus important que la tension est élevée.

C'est pourquoi il est intéressant d'avoir une tension de filtre stable et à une valeur optimale pour le ratio coût/performance d'un ensemble machine-onduleur. Dans le cas d'un véhicule hybride représenté sur la figure 1, l'utilisation du convertisseur continu/continu entre l'élément de stockage B et le filtre 3 partagé par les onduleurs C1, C2 permet, de la façon décrite dans le document WO 2005/081 387, de contrôler les échanges d'énergie et de maintenir la tension du filtre à sa valeur optimale.

Cependant, un véhicule hybride a essentiellement pour objet de diminuer la consommation en carburant et, par conséquent, la pollution, en entraînant les roues de façon électrique chaque fois que cela est possible, à partir de l'énergie stockée dans la batterie ou bien, dans un système à dérivation de puissance, de réaliser électriquement une variation continue du rapport de transmission permettant de choisir, à chaque instant, un rapport optimal.

Or, dans le schéma classique de la figure 1, le convertisseur continu-continu 1 qui vient s'insérer dans la chaîne de rendement diminue, par ses propres pertes, l'autonomie en roulage électrique.

D'autre part, toute la puissance électrique de traction passe par le convertisseur continu-continu, ce qui requiert, pour des vitesses relativement élevées, par exemple au-dessus de 50 km/h, une puissance importante et, donc, un convertisseur onéreux, lourd et encombrant.

C'est pourquoi, en envisageant une grande capacité de stockage, l'autonomie serait dégradée, de même que la masse et le coût de l'ensemble.

L'invention a pour objet de remédier à ces inconvénients grâce à une nouvelle topologie du convertisseur continu-continu ainsi qu'un nouveau mode de commande de celui-ci, permettant d'améliorer son rendement en phase de roulage électrique (moteur thermique arrêté), et de réduire la puissance passant dans le convertisseur, ce qui permet de dimensionner celui-ci en fonction de la puissance de l'assistance électrique (boost) et du freinage récupératif (brake) lorsque le moteur thermique est fonctionnel et, par conséquent, de réduire sont coût et son encombrement.

L'invention concerne donc, d'une façon générale, un système d'échange d'énergie électrique entre au moins un élément moteur-générateur et au moins un élément de stockage déterminant une tension de stockage continue entre un bus positif et un bus négatif sur lesquels sont branchés en parallèle un convertisseur continu/continu élévateur de tension, une capacité de filtrage pour la délivrance par ledit convertisseur d'une tension demandée entre le bus positif et le bus négatif, et un convertisseur continu/alternatif, branché sur au moins un élément moteur-générateur.

Conformément à l'invention, le système comprend au moins un thyristor branché en dérivation sur le bus positif, entre l'élément de stockage et la sortie du convertisseur-élévateur de tension, de façon à court-circuiter ledit convertisseur et un moyen d'amorçage du thyristor en fonction de la tension demandée à la capacité de filtrage, déterminant, au moins en mode décharge, le court-circuitage du convertisseur-élévateur de tension avec passage direct du courant par ledit thyristor, tant que la tension de la capacité de filtrage, sensiblement égale à la tension de la batterie, est suffisante pour que les machines électriques puissent fournir le couple qui leur est demandé, tel que cela est illustré sur les courbes enveloppes de la figure 3.

De façon particulièrement avantageuse, le système comprend deux thyristors inversés branchés en parallèle entre la batterie et le bus positif pour le court-circuitage du convertisseur-élévateur de tension par amorçage de l'un des thyristors en mode moteur et de l'autre thyristor en mode générateur.

Comme habituellement, le système comporte un moyen de pilotage du convertisseur-élévateur de tension pour la délivrance d'une tension demandée optimale entre le bus positif et le bus négatif. De façon particulièrement avantageuse, ce moyen de pilotage commande l'amorçage du thyristor en mode moteur pour une tension demandée inférieure à un seuil donné et, lorsque la tension demandée dépasse ledit seuil, détermine une augmentation progressive du courant passant par le convertisseur-élévateur de tension avec diminution du courant passant dans le thyristor jusqu'à blocage de ce dernier et annulation du courant dérivé, le surplus de courant fourni par le convertisseur servant au chargement, au moins de la capacité de filtrage, jusqu'à une valeur de consigne.

Dans un mode de réalisation préférentiel, le convertisseur-élévateur de tension comporte une inductance ayant une entrée branchée sur une borne positive de l'élément de stockage et une sortie branchée sur un point intermédiaire relié au bus positif et au bus négatif par deux circuits en série, respectivement un premier circuit comportant une diode montée en antiparallèle avec un transistor de puissance dont l'émetteur est relié au bus négatif et le collecteur au point intermédiaire, et un second circuit comportant une diode montée en antiparallèle avec un transistor de puissance dont l'émetteur est relié au point intermédiaire et le collecteur au bus positif, le circuit dérivé comportant un thyristor de court-circuitage du convertisseur branché entre la borne positive de l'élément de stockage et le bus positif.

L'invention s'applique spécialement à un véhicule hybride comportant un moteur principal d'entraînement et au moins une machine électrique ayant deux modes de fonctionnement selon les conditions de roulage et la volonté du conducteur, respectivement un mode moteur pour lequel la machine produit un couple se substituant ou s'ajoutant au couple appliqué par le moteur principal et un mode générateur pour lequel la machine produit un courant de chargement de l'élément de stockage et de la capacité de filtrage, le système comportant un moyen de pilotage du convertisseur-élévateur de tension pour le maintien à une valeur optimale de la tension demandée entre les deux bornes de la capacité de filtrage.

Conformément à l'invention, le moyen de pilotage du convertisseur-élévateur de tension commande successivement le blocage des IGBT du convertisseur-élévateur de tension lorsque le courant demandé est sensiblement nul, l'amorçage du thyristor pour le passage direct du courant par le circuit dérivé avec blocage du convertisseur-élévateur de tension lorsque la tension optimale demandée est sensiblement inférieure à celle de l'élément de stockage, et lorsque la tension demandée dépasse ledit seuil, détermine une augmentation progressive du courant passant par le convertisseur avec diminution progressive du courant passant par le thyristor, jusqu'à blocage de celui-ci.

Dans un mode de réalisation préférentiel, en traction électrique, le convertisseur-élévateur de tension est bloqué tant que la tension de stockage est suffisante pour atteindre le point de fonctionnement couple-vitesse demandé, le véhicule étant entraîné par la machine électrique seule avec passage direct du courant seulement par le thyristor.

En outre, dès que le point de fonctionnement couple-vitesse de la machine électrique requiert une tension de filtre supérieure à la tension de stockage, le moyen de pilotage commande une augmentation progressive du courant passant dans le convertisseur afin que celui-ci reprenne le contrôle de la tension pour le maintien de celle-ci à une valeur optimale correspondant au point de fonctionnement de la machine.

Selon une autre caractéristique préférentielle, à partir d'un état pour lequel la puissance échangée est sensiblement nulle, le moyen de pilotage commande d'abord l'amorçage du thyristor avec blocage du convertisseur pour le passage direct du courant par le thyristor à la tension de stockage puis, lorsque la tension filtre nécessaire dépasse la tension de stockage, commande le passage progressif du courant par le convertisseur pour le contrôle de la tension filtre en fonction du point de fonctionnement de la machine électrique.

De même, pour la diminution de la tension demandée à partir d'un état où ladite tension est supérieure à la tension de stockage et est contrôlée par le convertisseur continu/continu, le thyristor branché en dérivation est amorcé et la consigne de courant passant dans le convertisseur est réduite de façon à diminuer la tension filtre jusqu'à une valeur proche de la tension de stockage en conservant la tension juste nécessaire pour garder la possibilité de commander le courant dans l'inductance du convertisseur puis les transistors de puissance sont bloqués et le courant dans l'inductance diminue tandis que le courant dans le thyristor augmente jusqu'à fournir une tension filtre égale à la tension de stockage, le courant de gâchette du thyristor étant alors supprimé.

Avantageusement, le convertisseur continu/continu est piloté de façon que le passage de courant dans l'inductance limite la croissance dans le thyristor à l'amorçage de celui-ci sans nécessiter d'aide à la commutation.

Par ailleurs, l'invention s'applique spécialement au cas d'un véhicule hybride comportant deux machines électriques moteur-générateur. Dans ce cas, le convertisseur continu/continu est piloté de façon à atteindre la tension maximale requise par l'une ou l'autre des deux machines en fonction des points de fonctionnement de celles-ci.

D'autres caractéristiques avantageuses apparaîtront dans la description suivante d'un mode de réalisation particulier, donné à titre de simple exemple et illustré par les dessins annexés.

La figure 1 est un schéma de principe d'un véhicule hybride à dérivation de puissance.

La figure 2 est un schéma d'un convertisseur continu/continu de type classique.

La figure 3 est un diagramme représentant la forme des courbes enveloppes couple-vitesse selon la tension d'alimentation de l'onduleur.

La figure 4 est un schéma du convertisseur continu/continu selon l'invention.

La figure 5 est un diagramme illustrant le calcul de la tension en sortie du convertisseur en fonction des points de fonctionnement couple-vitesse de deux machines électriques.

La figure 6 montre schématiquement les deux états (figure 6a et figure 6b) permanents du circuit selon le mode de fonctionnement.

La figure 7 est un chronogramme d'une transition thyristor-convertisseur.

La figure 8 est un chronogramme d'une transition convertisseur-thyristor.

Comme indiqué plus haut, on connaît différents types de systèmes de propulsion hybride comportant un moteur thermique et une ou plusieurs machines électriques pouvant fonctionner en moteur ou générateur de façon à apporter, en mode moteur, un couple qui peut se substituer ou s'ajouter au couple fourni par le moteur thermique ou bien, à l'arrêt, servir au démarrage du moteur thermique et qui peuvent aussi être entraînés par le moteur thermique de façon à servir, en mode générateur, pour le rechargement de la batterie. Habituellement, chaque machine électrique à courant triphasé est reliée à la batterie par un convertisseur continu/alternatif et par un convertisseur continu/continu, élévateur de tension, qui est monté en parallèle avec une capacité de filtrage.

De tels convertisseurs sont décrits en détail, par exemple dans les documents WO 2005/036 297 et WO 2055/081 387.

La présente invention met en oeuvre des circuits électriques de ce type et s'applique spécialement à un véhicule hybride comportant un système d'échange d'énergie à dérivation de puissance électrique dont le principe est illustré par la figure 1.

Un tel véhicule comporte donc un moteur à combustion interne M dont l'arbre de sortie A est relié aux roues motrices R par une transmission mécanique T et un système S de dérivation de puissance comportant deux machines électriques moteur-générateur MG1 et MG2 qui sont du type triphasé et sont branchées chacune sur un convertisseur continu/alternatif, ces deux convertisseurs C1, C2 étant reliés par un circuit "bus" à deux branches 30, 30'.

Un tel système à dérivation de puissance électrique permet, en particulier, une variation continue du rapport de démultiplication entre l'arbre de transmission A et les roues motrices R. En effet, un flux de puissance mécanique dérivée permet, à partir de la transmission T, d'entraîner la première machine électrique MG1 qui, en fonctionnant en générateur, fournit une puissance électrique transmise à la seconde machine MG2 qui fournit alors un couple moteur appliqué sur la transmission T. A cet effet, les échanges d'énergie entre le moteur principal et les deux machines sont pilotés par une unité de contrôle recevant les diverses informations nécessaires pour la conduite du véhicule et relatives, en particulier, aux conditions de circulation, en montée, en descente ou en virage ainsi qu'une information de volonté du conducteur représentée par son action sur la pédale d'accélération ou sur le frein. A partir de ces informations, cette unité de contrôle peut calculer les tensions optimales qui doivent être appliquées sur les machines électriques MG1, MG2, ou fournies par celles-ci, pour faire varier de façon continue le rapport de transmission afin d'appliquer le couple souhaité sur les roues motrices.

En effet, comme le montre la figure 3, le rapport couple/vitesse de rotation d'une machine électrique dépend de la tension appliquée entre ses bornes, le couple à haute vitesse accessible étant d'autant plus important que la tension est élevée.

Dans le cas d'un système à dérivation de puissance du type représenté sur la figure 1, l'unité de contrôle (non représenté) va donc déterminer, en fonction des conditions de circulation et de la volonté du conducteur, un point de fonctionnement couple/vitesse correspondant à une tension optimale pour chacune des deux machines MG1, MG2.

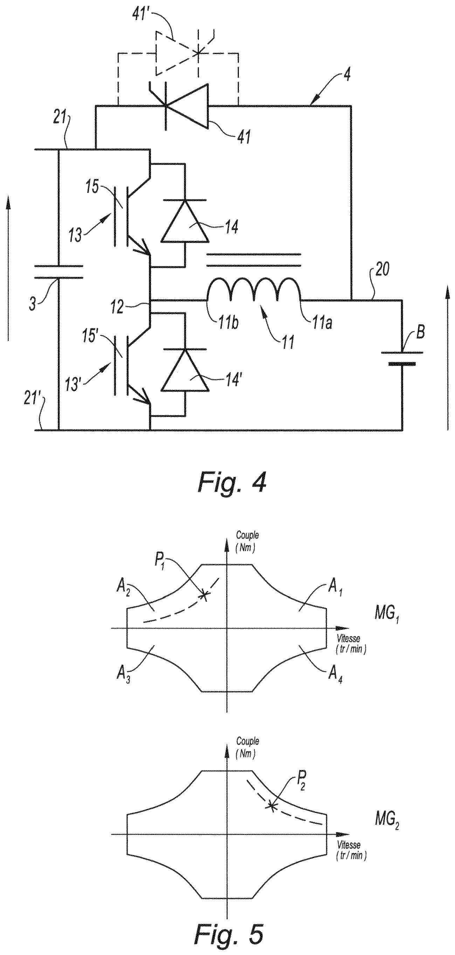

La figure 5, par exemple, indique, selon la tension, les points de fonctionnement que l'on peut atteindre sur deux diagrammes superposés correspondant, en haut, à la machine MG1 et en bas à la machine MG2. Sur chaque diagramme, les secteurs A1 et A3 pour lesquels le couple et la vitesse sont de même signe, correspondent au fonctionnement en moteur alors que les secteurs A2 et A4 pour lesquels le couple et la vitesse sont de signes contraires, correspondent à un fonctionnement en générateur.

Par exemple, sur la figure 5, le point P1 correspond à un fonctionnement en générateur de la machine MG1 et le point P2 correspond à un fonctionnement en moteur de la machine MG2.

L'unité de contrôle peut donc calculer, en fonction des informations qu'elle reçoit sur les conditions de circulation et la volonté du conducteur, les tensions optimales à appliquer sur les deux machines MG1, MG2, en particulier pour minimiser les pertes de l'onduleur C1, C2 pour le point de fonctionnement P1, P2 choisi.

Cependant, les deux onduleurs sont soumis à la même tension appliquée sur les deux branches 30, 30' du circuit bus et cette tension doit donc être la tension la plus élevée des tensions requise par chaque machine calculée par l'unité de contrôle.

Par ailleurs, la tension fournie par le générateur MG1 entraîné par le moteur M dépend de la vitesse du moteur, de même que le couple moteur fourni par la machine MG2 dépend de cette tension. C'est pourquoi les deux branches du circuit de liaison 3 sont reliées aux deux pôles de la batterie B par l'intermédiaire d'un convertisseur continu/continu 1 monté en parallèle avec une capacité de filtrage 3, de la façon décrite par exemple dans le document WO 2005/081 387, cité plus haut.

Un tel montage permet, en particulier, d'établir une tension de filtre stable et à une valeur optimale pour le ratio coût/performance des ensembles machine-onduleur. En particulier, dans le cas d'un système à deux machines électriques, ce convertisseur est du type décrit en détail dans le document WO 2005/081 387 et représenté sur la figure 2 qui permet, d'une part, de contrôler les échanges d'énergie entre le stockage et la dynamique du véhicule et, d'autre part, de maintenir la tension filtre à sa valeur optimale.

Cependant, dans un tel système, toute la puissance électrique passe par le convertisseur continu/continu 1 qui doit donc être dimensionné en conséquence et, en outre, diminue l'autonomie en roulage électrique, du fait de ses pertes propres.

L'invention permet de résoudre ce problème grâce à la disposition représentée sur la figure 4.

Le convertisseur continu/continu 1 est du type connu comprenant une inductance 11 ayant une entrée 11a reliée par la ligne d'alimentation 20 à la borne positive de la batterie et une sortie 11b branchée sur un point intermédiaire 12 entre deux circuits 13, 13' montés en série et comportant chacun une diode 14, 14' et un transistor de puissance 15, 15' montés en antiparallèle, le collecteur du transistor 15 étant branché sur le bus positif 21 alors que l'émetteur du transistor 15' est branché sur le bus négatif 21'.

Selon l'invention, le convertisseur 1 peut être court-circuité par un circuit dérivé 4 de liaison entre la ligne d'alimentation 20 reliée au pôle positif de la batterie B et le bus positif 21 comportant un thyristor 41 représenté en traits pleins, pour un fonctionnement en mode moteur seul et, éventuellement, un second thyristor 41', de sens inversé, représenté en pointillés, pour un fonctionnement en moteur et générateur.

Les deux thyristors 41, 41' peuvent être amorcés sur ordre de l'unité de contrôle. Un même et unique ordre pilote les deux gâchettes.

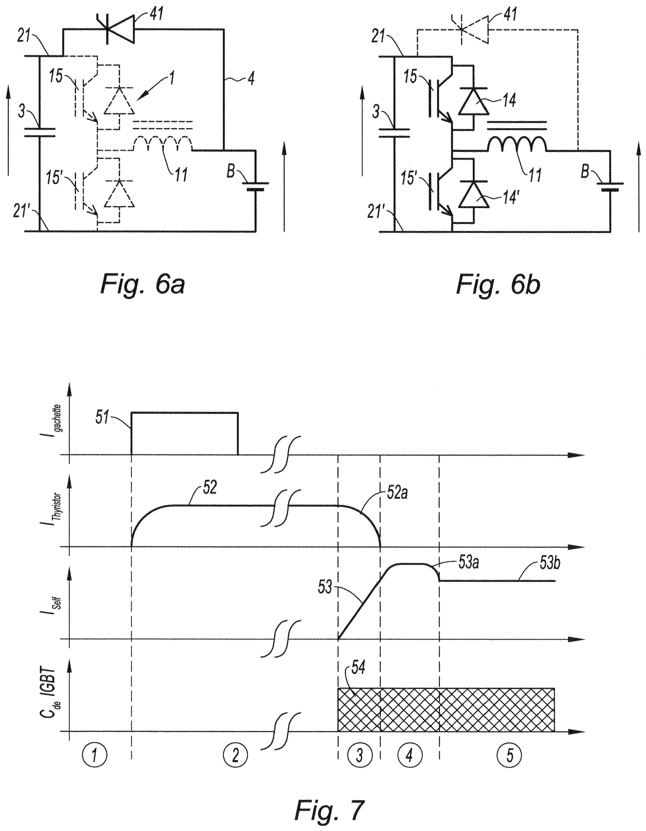

D'une façon générale, en fonctionnement normal à vitesse réduite, le véhicule peut être entraîné en mode "tout électrique" tant que la vitesse reste assez faible, par exemple dans un encombrement. Tant que la tension de stockage fournie par la batterie B est suffisante pour atteindre le point de fonctionnement couple-vitesse des deux machines, le courant peut passer directement par le thyristor 41, de la façon représentée sur la figure 6a, en court-circuitant le convertisseur 1 représenté en pointillés et dont les transistors 15, 15' sont bloqués par l'unité de contrôle. Durant cette phase, les pertes se limitent aux pertes de conduction du thyristor et, grâce au court-circuitage du convertisseur 1, on élimine les pertes générées par celui-ci, c'est-à-dire les pertes fer et joule dans l'inductance 11 et les pertes de conduction et de commutation dans les transistors 15, 15' et les diodes 14, 14'.

En revanche, dès que les informations fournies à l'unité de contrôle indiquent que le point de fonctionnement d'au moins une des deux machines MG1 et MG2 requiert une tension de filtre supérieure à la tension de stockage fournie par la batterie, l'unité de contrôle fait commuter les transistors 15, 15', de façon à faire passer le courant dans le convertisseur 1 qui reprend progressivement le contrôle de la tension. En particulier, le convertisseur 1 est piloté par l'unité de contrôle de façon à déterminer les tensions optimales à appliquer sur les machines pour obtenir les couples souhaités et, en outre, à minimiser les pertes dans les machines, le convertisseur 1 et les onduleurs C1, C2.

Comme le montre la figure 5, plus la puissance et la vitesse de rotation des machines augmentent, plus la tension en sortie du convertisseur 1 doit être élevée. Comme il y a deux machines électriques MG1, MG2, la tension en sortie du convertisseur 1 est calculée de façon à atteindre le point de fonctionnement ayant la tension la plus élevée.

Au fur et à mesure de la montée en puissance du convertisseur 1, le courant dans le thyristor 41 diminue progressivement jusqu'à s'annuler en provoquant le blocage du thyristor. Le circuit est alors dans un état permanent de pilotage par le convertisseur 1, représenté sur la figure 6b.

La transition du circuit 6a au circuit 6b se fait progressivement de la façon représentée schématiquement sur le chronogramme de la figure 7 qui indique, en fonction du temps, la variation de l'intensité du courant passant respectivement dans la gâchette (courbe 51), dans le thyristor 41 (52), dans l'inductance 11 (53) et dans les transistors 15, 15' (54).

En phase 1, le véhicule est à l'arrêt et la puissance échangée est sensiblement nulle.

La phase 2 correspond à une accélération progressive du véhicule en restant à vitesse réduite, par exemple pendant un encombrement. Lorsque le véhicule doit avancer, l'unité de contrôle alimente la gâchette (courbe 51) pour amorcer le thyristor 41 dans lequel le courant augmente progressivement jusqu'à s'établir à la valeur (52) correspondant à la tension requise qui, à vitesse réduite, est au plus égale à la tension de stockage fournie par la batterie. Une fois le courant établi dans le thyristor, cet état est stable et il n'est plus nécessaire de maintenir le courant dans la gâchette (51a).

La phase 3 correspond à une demande d'accélération qui nécessite une tension supérieure à la tension de stockage pour optimiser le fonctionnement des machines. L'unité de contrôle commande alors la commutation des transistors 15, 15' du convertisseur 1 de façon à augmenter progressivement le courant passant dans l'inductance 11, comme l'indique la rampe 53.

La demande de courant sur le bus continu 21, 21' étant sensiblement la même, le courant dans le thyristor 41 va diminuer jusqu'à s'annuler (partie 52$_a$) en provoquant le blocage du thyristor.

La tension de filtre reste égale à la tension de stockage.

En phase 4, le convertisseur 1 fournit un surplus de courant (partie 53a) permettant de charger la capacité de filtrage 3 jusqu'à une valeur de consigne (partie 53b).

En phase 5 toute la puissance requise passe par le convertisseur 1, le circuit se trouvant dans l'état de la figure 6b et le courant passant dans les transistors 15, 15' correspondant à la zone 54, selon la tension optimale à fournir, déterminée par l'unité de contrôle.

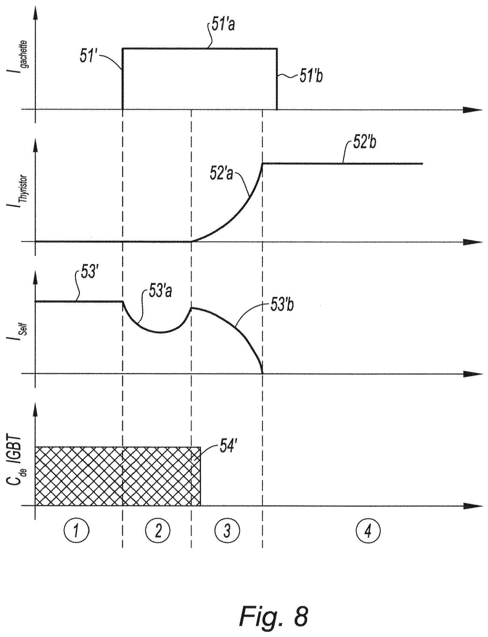

Inversement, la figure 8 est un chronogramme illustrant une diminution de la tension-filtre jusqu'à une tension proche de la tension de stockage, par exemple pour un ralentissement du véhicule jusqu'à une vitesse relativement faible.

En phase 1, le circuit est dans l'état de la figure 6b, tout le courant passant par le convertisseur continu/continu 1. L'inductance 11 laisse donc passer un courant d'intensité 53'.

Lorsque les informations reçues par l'unité de contrôle nécessitent un abaissement de la tension de filtre, la gâchette du thyristor 41 est amorcée (courbe 51') même si celui-ci, soumis à une tension inverse, ne peut pas conduire de courant. En même temps, la tension du filtre est diminuée jusqu'à une tension proche de la tension de stockage en maintenant, cependant, la différence de tension nécessaire pour garder la commande du courant dans l'inductance (courbe 53'a).

En phase 3, l'unité de contrôle bloque les transistors IGBT 15, 15' et le courant dans l'inductance 11 décroît progressivement (53'b) alors que le courant passant dans le thyristor 41, déjà amorcé, s'accroît (52'a) jusqu'à ce que, en phase 4, le thyristor fournisse tout le courant filtre (52'b). Tout le courant passe alors par le thyristor 41 et l'on peut couper l'alimentation de la gâchette du thyristor (51'b). Le circuit se trouve alors dans l'état de la figure 6a.

Grâce à l'invention, en roulage tout électrique, la puissance provenant de l'élément de stockage passe directement par le circuit dérivé 4 et n'est donc plus limitée par la puissance du convertisseur 1 mais seulement par les machines, la batterie B ou le thyristor 41. Par rapport aux techniques connues, il est donc possible de sous dimensionner en puissance le convertisseur continu/continu 1 qui ne reprend le contrôle du courant que lorsque le point de fonctionnement d'une des machines demande une tension de filtre supérieure à la tension de stockage fournie par la batterie.

En revanche, dès que les points de fonctionnement des deux machines le permettent, l'unité de contrôle peut bloquer les transistors du convertisseur 1 de façon à fonctionner avec un minimum de pertes.

Il et à noter, par ailleurs, que, compte tenu de la faible différence de tension appliquée sur l'inductance 11, la variation de courant en phase 3 est suffisamment faible pour ne pas avoir à ajouter d'élément d'aide à la commutation (snubbers) pour limiter la croissance du courant dans le thyristor.

Bien entendu, l'invention ne se limite pas au seul mode de réalisation qui vient d'être décrit, d'autres dispositions ou des circuits équivalents pouvant permettre de fonctionner de la façon revendiquée en restant dans le cadre de protection de l'invention.

En particulier, le circuit des figures 6a et 6b, avec un seul thyristor 41, est prévu pour un fonctionnement en mode moteur pour lequel la puissance passant par le convertisseur 1 peut être importante si l'on souhaite une possibilité de roulage tout électrique à des vitesses relativement élevées.

Cependant, l'invention présente également des avantages en mode générateur et c'est pourquoi de la façon indiquée sur la figure 4, le circuit dérivé 4 peut aussi comporter un second thyristor inversé 41' de façon à faire passer le courant dans les deux sens.

D'autre part, l'invention est spécialement adaptée au fonctionnement d'un véhicule hybride à dérivation de puissance électrique utilisant deux machines électriques fonctionnant, l'une en générateur et l'autre en moteur, mais présenterait aussi des avantages dans le cadre d'un hybride parallèle comportant une seule machine électrique.

Par ailleurs il est particulièrement avantageux, pour le passage de fortes puissances, d'utiliser un convertisseur continu/continu du type décrit en détail et représenté sur les dessins mais le court-circuitage du convertisseur, selon l'invention, présenterait également des avantages pour d'autres montages de convertisseurs continu/continu tels que décrits, par exemple, dans le document FR-A-2 858 484.

**Revendications**

1. Système d'échange d'énergie électrique entre au moins un élément moteur-générateur (MG) et au moins un élément de stockage B déterminant une tension de stockage continue entre deux branches (21, 21') d'un circuit bus sur lesquelles sont branchés en parallèle un convertisseur continu/continu élévateur de tension (1), une capacité de filtrage (3) pour la délivrance par ledit convertisseur (1) d'une tension demandée entre un bus positif (21) et un bus négatif (21'), et un convertisseur continu/alternatif (C1, C2), branché sur au moins une machine électrique (MG1, MG2), **caractérisé par le fait qu'**il comprend au moins un thyristor (41) branché en dérivation sur le bus positif (21), entre l'élément de stockage (B) et la sortie du convertisseur-élévateur de tension (1), de façon à court-circuiter ledit convertisseur (1) et un moyen d'amorçage du thyristor (41) en fonction de la tension demandée à la capacité de filtrage (3), déterminant, au moins en mode décharge, le court-circuitage du convertisseur-élévateur de tension (1) avec passage direct du courant par ledit thyristor (41), tant que la tension de la capacité de filtrage (3) sensiblement égale à la tension de l'élément de stockage, est suffisante, ledit système d'échange d'énergie électrique étant appliqué à un véhicule hybride à dérivation de puissance comportant un moteur principal d'entraînement (M) et ladite au moins une machine électrique (MG1, MG2) branchée sur ledit convertisseur continu/alternatif (C1, C2) relié audit élément (B) de stockage de ladite tension continue par ledit bus positif (21) et ledit bus négatif (21') entre lesquels sont branchés en parallèle ladite capacité de filtrage (3) et ledit convertisseur-élévateur de tension (1), ladite machine électrique (MG1, MG2) ayant deux modes de fonctionnement selon les conditions de roulage et la volonté du conducteur, respectivement un mode moteur pour lequel la machine produit un couple se substituant ou s'ajoutant au couple appliqué par le moteur principal (M) et un mode générateur pour lequel la machine (MG1, MG2) produit un courant de chargement de l'élément de stockage (B) et de la capacité de filtrage (3), le système comportant un moyen de pilotage du convertisseur-élévateur de tension (1) pour le maintien à une valeur optimale de la tension demandée entre le bus positif (21) et le bus négatif (21'), le moyen de pilotage du convertisseur-élévateur de tension (1) commandant le blocage des IGBT du convertisseur-élévateur de tension (1) lorsque le courant demandé est sensiblement nul, l'amorçage du thyristor (41) pour le passage direct du courant par le circuit dérivé (4) avec blocage du convertisseur-élévateur de tension (1) lorsque la tension optimale demandée est sensiblement inférieure à celle de l'élément de stockage (B), et lorsque la tension demandée dépasse ledit seuil, déterminant une augmentation progressive (53) du courant passant par le convertisseur (1) avec diminution progressive (52a) du courant passant par le thyristor (41), jusqu'à blocage de celui-ci.

**2.** Système d'échange d'énergie selon la revendication 1, **caractérisé par le fait qu'**il comprend deux thyristors inversés (41, 41') branchés en parallèle entre le bus positif (21) et l'élément de stockage (B) pour le court-circuitage du convertisseur-élévateur de tension (1) par amorçage de l'un des thyristors (41) en mode moteur et de l'autre thyristor (41') en mode générateur.

**3.** Système d'échange d'énergie selon l'une des revendications 1 et 2, comportant un moyen de pilotage du convertisseur-élévateur de tension (1) pour la délivrance d'une tension demandée optimale entre le bus positif (21) et le bus négatif (21'), **caractérisé**

**par le fait que** le moyen de pilotage commande l'amorçage du thyristor (41) en mode moteur pour une tension demandée inférieure à un seuil donné et, lorsque la tension demandée dépasse ledit seuil, détermine une augmentation progressive du courant (53) passant par le convertisseur-élévateur (1) de tension avec diminution du courant (52) passant dans le thyristor (41) jusqu'à blocage de ce dernier et annulation du courant dérivé, le surplus de courant (53a) fourni par le convertisseur (1) servant au chargement, au moins de la capacité de filtrage (3) jusqu'à une valeur de consigne.

**4.** Système d'échange d'énergie selon l'une des revendications précédentes, **caractérisé par le fait que** le convertisseur-élévateur de tension (1) comporte une inductance (11) ayant une entrée (11a) branchée sur une borne positive de l'élément de stockage (B) et une sortie (11b) branchée sur un point intermédiaire (12) relié au bus positif (21) et au bus négatif (21') par deux circuits en série, respectivement un premier circuit (13') comportant une diode (14') montée en antiparallèle avec un transistor de puissance (15') dont l'émetteur est relié au bus négatif (21') et le collecteur au point intermédiaire (12), et un second circuit (13) comportant une diode (41) montée en antiparallèle avec un transistor de puissance (15) dont l'émetteur est relié au point intermédiaire (12) et le collecteur au bus positif (21), et que le circuit dérivé (4) comportant un thyristor (41) de court-circuitage du convertisseur est branché entre la borne positive de l'élément de stockage (B) et le bus positif (21).

**5.** Système d'échange d'énergie pour véhicule hybride selon la revendication 1, **caractérisé par le fait que**, en traction électrique, le convertisseur-élévateur de tension (1) est bloqué tant que la tension de stockage est suffisante pour atteindre le point de fonctionnement couple-vitesse demandé, le véhicule étant entraîné seulement par la machine électrique (MG1, MG2) avec passage direct du courant seulement par le thyristor (41).

**6.** Système d'échange d'énergie selon la revendication 5, **caractérisé par le fait que**, dès que le point de fonctionnement couple-vitesse de la machine électrique (MG1, MG2) requiert une tension de filtre supérieure à la tension de stockage, le moyen de pilotage commande une augmentation progressive (53) du courant passant dans le convertisseur (1) afin que celui-ci reprenne le contrôle de la tension pour le maintien de celle-ci à une valeur optimale correspondant au point de fonctionnement de la machine (MG1, MG2).

**7.** Système d'échange d'énergie selon l'une des revendications précédentes, **caractérisé par le fait que**, à partir d'un état pour lequel la puissance échangée est sensiblement nulle, le moyen de pilotage commande d'abord l'amorçage (51) du thyristor (41) avec blocage du convertisseur (1) pour le passage direct du courant par le thyristor (41) à la tension de stockage puis, lorsque la tension-filtre nécessaire dépasse la tension de stockage, commande le passage progressif (53) du courant par le convertisseur (1) pour le contrôle de la tension filtre en fonction du point de fonctionnement (P1, P2) de la machine électrique (MG1, MG2).

8.  Système d'énergie selon l'une des revendications précédentes, **caractérisé par le fait que**, pour la diminution de la tension demandée à partir d'un état où ladite tension est supérieure à la tension de stockage et contrôlée par le convertisseur continu/continu (1), le thyristor (41) branché en dérivation est amorcé et la consigne de courant passant dans le convertisseur (1) est réduite de façon à diminuer la tension-filtre jusqu'à une valeur proche de la tension de stockage en conservant la tension juste nécessaire pour garder la possibilité de commander le courant dans l'inductance (11) du convertisseur (1) puis les transistors de puissance (15, 15') sont bloqués et le courant (53'b) dans l'inductance (11) diminue tandis que le courant (52'a) dans le thyristor (41) augmente jusqu'à fournir une tension filtre égale à la tension de stockage, le courant (51'b) de gâchette du thyristor (41) étant alors supprimé.

9.  Système d'échange d'énergie selon la revendication 8, **caractérisé par le fait que** le convertisseur continu/continu (1) est piloté de façon que le passage de courant dans l'inductance (11) limite la croissance de l'intensité dans le thyristor (41) à l'amorçage de celui-ci.

10. Système d'échange d'énergie selon l'une des revendications 1 à 9, **caractérisé par le fait qu'**il comporte deux machines électriques moteur-générateur (MG1, MG2) et que le convertisseur continu/continu (1) est piloté de façon à atteindre la tension maximale requise par l'une ou l'autre des deux machines (MG1, MG2) en fonction des points de fonctionnement (P1, P2) de celles-ci.

**Patentansprüche**

1.  System zum Austausch von elektrischer Energie zwischen mindestens einem Motor-Generator-Element (MG) und mindestens einem Speicherelement B, das eine kontinuierliche Speicherspannung zwischen zwei Zweigen (21, 21') einer Bus-Schaltung bestimmt, auf denen ein DC-DC-Aufwärts-Spannungswandler (1), eine Filterkapazität (3) zum Abgeben von einer gewünschten Spannung zwischen einem positiven Bus (21) und einem negativen Bus (21') durch den Wandler (1) und einen DC/AC-Wandler (C1, C2), der an mindestens eine elektrische Maschine (MG1, MG2) angeschlossen ist, parallel geschaltet sind, **dadurch gekennzeichnet, dass** es mindestens einen Thyristor (41) aufweist, der auf dem positiven Bus (21) zwischen dem Speicherelement (B) und dem Ausgang des Aufwärts-Spannungswandlers (1) derart abgezweigt angeschlossen ist, um den Wandler (1) und Mittel zum Starten des Thyristors (41) in Abhängigkeit von der gewünschten Spannung an der Filterkapazität (3) kurzzuschließen, wodurch mindestens im Entlademodus das Kurzschließen des Aufwärts-Spannungswandlers (1) mit direktem Durchfluss des Stroms durch den Thyristor (41) bestimmt wird, solange die Spannung der Filterkapazität (3), die im Wesentlichen gleich der Spannung des Speicherelements ist, ausreichend ist, wobei das System zum Austausch von elektrischer Energie an einem Hybridfahrzeug mit Leistungsverzweigung angewendet wird, das einen Hauptantriebsmotor (M) und die mindestens eine elektrische Maschine (MG1, MG2) aufweist, die an den DC/AC-Wandler (C1, C2) angeschlossen ist, der mit dem Speicherelement (B) der Gleichspannung durch den positiven Bus (21) und den negativen Bus (21') verbunden ist, zwischen denen die Filterkapazität (3) und der Aufwärts-Spannungswandler (1) parallel geschaltet sind, wobei die elektrische Maschine (MG1, MG2) zwei Betriebsmodi je nach den Fahrbedingungen und dem Willen des Fahrers aufweist, jeweils einen Motormodus, für den die Maschine ein Drehmoment erzeugt, das das Drehmoment, das von dem Hauptmotor (M) aufgebracht wird, ersetzt oder ergänzt, und einen Generatormodus, für den die Maschine (MG1, MG2) einen Ladestrom des Speicherelements (B) und der Filterkapazität (3) erzeugt, wobei das System ein Steuermittel des Aufwärts-Spannungswandlers (1) aufweist, um die gewünschte Spannung zwischen dem positiven Bus (21) und dem negativen Bus (21') auf einem optimalen Wert zu halten, wobei das Steuermittel des Aufwärts-Spannungswandlers (1) das Blockieren der IGBTs des Aufwärts-Spannungswandlers (1), wenn der gewünschte Strom im Wesentlichen gleich Null ist, das Starten des Thyristors (41) für den direkten Durchfluss des Stroms durch den abgeleiteten Schaltkreis (4) mit Blockierung des Aufwärts-Spannungswandlers (1) steuert, wenn die gewünschten optimale Spannung im Wesentlichen niedriger als jene des Speicherelements (B) ist und wenn die gewünschte Spannung diesen Schwellenwert übersteigt, wodurch eine progressive Erhöhung (53) des Stroms, der durch den Wandler (1) fließt, mit progressiver Verringerung (52a) des Stroms bestimmt wird, der durch den Thyristor (41) fließt, bis dieser blockiert wird.

2. System zum Austausch von elektrischer Energie nach Anspruch 1, **dadurch gekennzeichnet, dass** es zwei umgekehrte Thyristoren (41, 41') aufweist, die zwischen dem positiven Bus (21) und dem Speicherelement (B) zum Kurzschließen des Aufwärts-Spannungswandlers (1) durch Starten des einen der Thyristoren (41) im Motormodus und des anderen Thyristors (41') im Generatormodus parallel geschaltet sind.

3. System zum Austausch von elektrischer Energie nach einem der Ansprüche 1 und 2, umfassend ein Steuermittel des Aufwärts-Spannungswandlers (1) zum Abgeben von einer gewünschten optimalen Spannung zwischen dem positiven Bus (21) und dem negativen Bus (21'), **dadurch gekennzeichnet, dass** das Steuermittel das Starten des Thyristors (41) im Motormodus für eine gewünschte Spannung steuert, die niedriger als ein bestimmter Schwellenwert ist, und wenn die gewünschte Spannung den Schwellenwert übersteigt, eine progressive Erhöhung des Stroms (53), der durch den Aufwärts-Spannungswandler (1) fließt, mit Verringerung des Stroms (52), der durch den Thyristor (41) fließt, bis zur Blockierung dieses Letzteren und Annullierung des abgeleiteten Stroms bestimmt, wobei der Stromüberschuss (53a), der von dem Wandler (1) bereitgestellt wird, zum Laden mindestens der Filterkapazität (3) bis zu einem Sollwert dient.

4. System zum Austausch von elektrischer Energie nach einem der vorhergehenden Ansprüche, **dadurch gekennzeichnet, dass** der Aufwärts-Spannungswandler (1) eine Drosselspule (11) aufweist, die einen Eingang (11a), der an einer positiven Klemme des Speicherelements (B) angeschlossen ist, und einen Ausgang (11b) aufweist, der an einem Zwischenpunkt (12) angeschlossen ist, der mit dem positiven Bus (21) und dem negativen Bus (21') durch zwei in Reihe geschaltete Schaltkreise verbunden ist, jeweils einen ersten Schaltkreis (13'), der eine Diode (14') aufweist, die mit einem Leistungstransistor (15') antiparallel geschaltet ist, dessen Sender mit dem negativen Bus (21') und dessen Kollektor mit dem Zwischenpunkt (12) verbunden ist, und einen zweiten Schaltkreis (13), der eine Diode (41) aufweist, die mit einem Leistungstransistor (15) antiparallel geschaltet ist, dessen Sender mit dem Zwischenpunkt (12) und dessen Kollektor mit dem positiven Bus (21) verbunden ist, und dadurch, dass der abgeleitete Schaltkreis (4), der einen Thyristor (41) zum Kurzzuschließen des Wandlers aufweist, zwischen der positiven Klemme des Speicherelements (B) und dem positiven Bus (21) angeschlossen ist.

5. System zum Austausch von elektrischer Energie nach Anspruch 1, **dadurch gekennzeichnet, dass** der Aufwärts-Spannungswandler (1) im elektrischen Antrieb blockiert ist, solange die Speicherspannung ausreichend ist, um den gewünschten Drehmoment-Drehzahl-Arbeitspunkt zu erreichen, wobei das Fahrzeug nur von der elektrischen Maschine (MG1, MG2) mit direktem Durchfluss des Stroms nur durch den Thyristor (41) angetrieben wird.

6. System zum Austausch von elektrischer Energie nach Anspruch 5, **dadurch gekennzeichnet, dass**, sobald der Drehmoment-Drehzahl-Arbeitspunkt der elektrischen Maschine (MG1, MG2) eine Filterspannung erfordert, die höher als die Speicherspannung ist, das Steuermittel eine progressive Erhöhung des Stroms (53), der durch den Wandler (1) fließt, steuert, damit dieser die Steuerung der Spannung übernimmt, um diese auf einem optimalen Wert zu halten, der dem Arbeitspunkt der Maschine entspricht (MG1, MG2).

7. System zum Austausch von elektrischer Energie nach einem der vorhergehenden Ansprüche, **dadurch gekennzeichnet, dass** ab einem Zustand, in dem die ausgetauschte Leistung im Wesentlichen Null ist, das Steuermittel zunächst das Starten (51) des Thyristors (41) mit dem Blockieren des Wandlers (1) für den direkten Durchfluss des Stroms durch den Thyristor (41) bei der Speicherspannung steuert und dann, wenn die Filterspannung notwendigerweise die Speicherspannung übersteigt, den progressiven Durchfluss (53) des Stroms durch den Wandler (1) zum Steuern der Filterspannung in Abhängigkeit von dem Arbeitspunkt (P1, P2) der elektrischen Maschine (MG1, MG2) steuert.

8. Energiesystem nach einem der vorhergehenden Ansprüche, **dadurch gekennzeichnet, dass** für die Verringerung der gewünschten Spannung ausgehend von einem Zustand, in dem die Spannung höher als die Ladespannung ist und von dem DC-DC Spannungswandler (1) gesteuert wird, der Thyristor (41), der abgezweigt angeschlossen ist, gestartet wird und der Sollwert des Stroms, der in dem Wandler (1) fließt, derart reduziert wird, um die Filterspannung bis zu einem Wert zu verringern, der nahe der Speicherspannung ist, wobei die richtige Spannung beibehalten wird, die notwendig ist, um die Möglichkeit zu haben, den Strom in der Drosselspule (11) des Wandlers (1) zu steuern, und dann werden die Leistungstransistoren (15, 15') blockiert und der Strom (53'b) in der Drosselspule (11) verringert sich, während der Strom (52'a) in dem Thyristor (41) ansteigt, bis eine Filterspannung bereitgestellt wird, die gleich der Speicherspannung ist, wobei der Gatestrom (51'b) des Thyristors (41) dann aufgehoben wird.

9. System zum Austausch von elektrischer Energie nach Anspruch 8, **dadurch gekennzeichnet, dass** der DC-DC-Wandler (1) derart gesteuert wird, dass der Stromdurchfluss in der Drosselspule (11) die Zunahme der Intensität in dem Thyristor (41) bei dem Starten von diesem begrenzt.

10. System zum Austausch von elektrischer Energie nach einem der Ansprüche 1 bis 9, **dadurch gekennzeichnet, dass** es zwei elektrische Motor-Generator-Maschinen (MG1, MG2) aufweist und dass der DC-DC-Wandler (1) derart gesteuert wird, um die maximale Spannung, die von der einen oder der anderen der zwei Maschinen (MG1, MG2) benötigt wird, in Abhängigkeit von den Arbeitspunkten (P1, P2) von diesen erreicht.

**Claims**

1. System for electrical energy exchange between at least one motor-generator element (MG) and at least one storage element B determining a DC storage voltage between two branches (21, 21') of a bus circuit to which are wired in parallel a voltage-booster DC/DC converter (1), a filtering capacitor (3) for the delivery by said converter (1) of a requested voltage between a positive bus (21) and a negative bus (21'), and a DC/AC converter (C1, C2), wired to at least one electric machine (MG1, MG2), **characterized by** the fact that it comprises at least one thyristor (41) wired up bypass fashion to the positive bus (21), between the storage element (B) and the output of the voltage-booster converter (1), so as to short-circuit said converter (1) and a means for priming the thyristor (41) as a function of the voltage requested from the filtering capacitor (3), determining, at least in discharge mode, the short-circuiting of the voltage-booster converter (1) with direct passage of the current through said thyristor (41), as long as the voltage of the filtering capacitor (3) substantially equal to the voltage of the storage element, is sufficient, said electrical energy exchange system being applied to a power-bypass hybrid vehicle comprising a main drive motor (M) and said at least one electric machine (MG1, MG2) wired to said DC/AC converter (C1, C2) connected to said element (B) for storing said DC voltage by said positive bus (21) and said negative bus (21') between which are wired in parallel said filtering capacitor (3) and said voltage-booster converter (1), said electric machine (MG1, MG2) having two operating modes according to the motoring conditions and the driver's wishes, respectively a motor mode for which the machine produces a torque that is substituted for or added to the torque applied by the main engine (M) and a generator mode for which the machine (MG1, MG2) produces a current for charging the storage element (B) and the filtering capacitor (3), the system comprising a means for regulating the voltage-booster converter (1) so as to maintain at an optimal value the requested voltage between the positive bus (21) and the negative bus (21'), the means for regulating the voltage-booster converter (1) ordering the disabling of the IGBTs of the voltage-booster converter (1) when the requested current is substantially zero, the priming of the thyristor (41) for the direct passage of the current through the bypass circuit (4) with disabling of the voltage-booster converter (1) when the requested optimal voltage is substantially below that of the storage element (B), and when the requested voltage exceeds said threshold, determining a progressive increase (53) of the current passing through the converter (1) with progressive decrease (52a) of the current passing through the thyristor (41), until the latter is disabled.

2. Energy exchange system according to Claim 1, **characterized by** the fact that it comprises two reverse thyristors (41, 41') wired in parallel between the positive bus (21) and the storage element (B) for the short-circuiting of the voltage-booster converter (1) by priming of one of the thyristors (41) in motor mode and the other thyristor (41') in generator mode.

3. Energy exchange system according to one of Claims 1 and 2, comprising a means for regulating the voltage-booster converter (1) for the delivery of an optimal requested voltage between the positive bus (21) and the negative bus (21'), **characterized by** the fact that the regulating means orders the priming of the thyristor (41) in motor mode for a requested voltage below a given threshold and, when the requested voltage exceeds said threshold, determines a progressive increase of the current (53) passing through the voltage-booster converter (1) with decrease of the current (52) passing into the thyristor (41) until the latter is disabled and the bypass current becomes zero, the surplus current (53a) provided by the converter (1) serving for the charging, at least of the filtering capacitor (3) up to a setpoint value.

4. Energy exchange system according to one of the preceding claims, **characterized by** the fact that the voltage-booster converter (1) comprises an inductor (11) having an input (11a) wired to a positive terminal of the storage element (B) and an output (11b) wired to an intermediate point (12) connected to the positive bus (21) and to the negative bus (21') by two circuits in series, respectively a first circuit (13') comprising a diode (14') arranged in antiparallel fashion with a power transistor (15') whose emitter is connected to the negative bus (21') and whose collector is connected to the intermediate point (12), and a second circuit (13) comprising a diode (41) arranged in antiparallel fashion with a power transistor (15) whose emitter is connected to the intermediate point (12) and whose collector is connected to the positive bus (21), and that the bypass circuit (4) comprising a thyristor (41) for short-circuiting the converter is wired between the positive terminal of the storage element (B) and the positive bus (21) .

5. Energy exchange system for hybrid vehicle according to Claim 1, **characterized by** the fact that, under electric traction, the voltage-booster converter (1) is disabled as long as the storage voltage is sufficient to attain the requested torque-speed operating point, the vehicle being propelled solely by the electric machine (MG1, MG2) with direct passage of the current solely through the thyristor (41).

6. Energy exchange system according to Claim 5, **characterized by** the fact that, as soon as the torque-speed operating point of the electric machine (MG1, MG2) requires a filter voltage greater than the storage voltage, the regulating means orders a progressive increase (53) of the current passing into the converter (1) so that the latter resumes control of the voltage so as to maintain the latter at an optimal value corresponding to the operating point of the machine (MG1, MG2) .

7. Energy exchange system according to one of the preceding claims, **characterized by** the fact that, starting from a state for which the power exchanged is substantially zero, the regulating means firstly orders the priming (51) of the thyristor (41) with disabling of the converter (1) for the direct passage of the current through the thyristor (41) to the storage voltage and then, when the necessary filter-voltage exceeds the storage voltage, orders the progressive passage (53) of the current through the converter (1) for the control of the filter voltage as a function of the operating point (P1, P2) of the electric machine (MG1, MG2).

8. Energy system according to one of the preceding claims, **characterized by** the fact that, for the decrease of the voltage requested starting from a state where said voltage is greater than the storage voltage and controlled by the DC/DC converter (1), the thyristor (41) wired up bypass fashion is primed and the setpoint for the current passing into the converter (1) is reduced so as to decrease the filter-voltage to a value close to the storage voltage while preserving the voltage just necessary to retain the possibility of ordering the current into the inductor (11) of the converter (1) and then the power transistors (15, 15') are disabled and the current (53'b) in the inductor (11) decreases whereas the current (52'a) in the thyristor (41) increases until it provides a filter voltage equal to the storage voltage, the gate current (51'b) of the thyristor (41) then being suppressed.

9. Energy exchange system according to Claim 8, **characterized by** the fact that the DC/DC converter (1) is regulated in such a way that the passage of current in the inductor (11) limits the growth of the current in the thyristor (41) to the priming of the latter.

10. Energy exchange system according to one of Claims 1 to 9, **characterized by** the fact that it comprises two motor-generator electric machines (MG1, MG2) and that the DC/DC converter (1) is regulated so as to attain the maximum voltage required by one or the other of the two machines (MG1, MG2) as a function of their operating points (P1, P2).

*Fig. 1*

Fig. 2

Fig. 3

Fig. 4

Fig. 5

*Fig. 6a*

*Fig. 6b*

*Fig. 7*

16

*Fig. 8*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005081387 A
- EP 1138539 A
- FR 2858484 A
- WO 2005036297 A
- WO 2055081387 A